# EUROPEAN PATENT APPLICATION

(11) **EP 2 223 973 A1**
(43) Date of publication of application: **01.09.2010**
(21) Application number: 10154598.6
(22) Date of filing: 25.02.2010
(51) Int. Cl.: C09C 1/30, C09C 1/36, C09C 3/00, C09C 3/12, C08G 77/00

(54) **Metal oxide fine particles, silicone resin composition and use thereof**

(30) Priority: 26.02.2009 JP 2009044302; 24.07.2009 JP 2009173386
(71) Applicant: Nitto Denko Corporation, Ibaraki-shi, Osaka 567-8680 (JP)
(72) Inventor: Fujii, Haruka, Ibaraki-shi Osaka (JP); Ozaki, Takashi, Ibaraki-shi Osaka (JP); Katayama, Hiroyuki, Ibaraki-shi Osaka (JP)
(74) Representative: Grünecker, Kinkeldey, Stockmair & Schwanhäusser Anwaltssozietät

(57) **Abstract**

The present invention relates to metal oxide fine particles treated with a surface-treating agent containing a silicon compound having an alkenyl group having 2 to 20 carbon atoms, a silicone resin composition obtained by reacting the metal oxide fine particles with an oxganohydrogensiloxane, a photosemiconductor element-encapsulating material containing the silicone resin composition, and a photosemiconductor device including a photosemiconductor element encapsulated with the silicone resin composition or the photosemiconductor element-encapsulating material.

## Description

### FIELD OF THE INVENTION

The present invention relates to metal oxide fine particles. More specifically, it relates to metal oxide fine particles surface-treated with a specific compound, a silicone resin composition obtained by reacting the metal oxide fine particles, a photosemiconductor element-encapsulating material containing the silicone resin composition, and a photosemiconductor device including a photosemiconductor element encapsulated with the silicone resin composition or the photosemiconductor element-encapsulating material.

### BACKGROUND OF THE INVENTION

In recent years, light-emitting diode (LED) has attracted attention as a new illumination light source which realizes significant energy-saving. Since illumination LED has a very high luminance per chip unlike display LED, excellent light resistance and heat resistance are required for a transparent resin with which illumination LED is encapsulated. From such a viewpoint, for illumination LED, silicone resins having light resistance higher than epoxy resins widely used for display LED have been commonly utilized as encapsulating materials (see JP-A-2000-198930, JP-A-2004-186168, and JP-A-2008-150437).

However, a silicone resin generally has such a low refractive index as about 1.4 and thus a difference from the refractive index (about 2.5) of an LED element becomes large. Therefore, there is a problem that total reflection light increases at the interface between the resin and the element and hence light-extraction efficiency decreases.

In order to solve the problem, it is required to increase the refractive index of the silicone resin with maintaining transparency and heat resistance. As one method, there has been proposed a method of dispersing metal oxide fine particles into the silicone resin, the fine particles having a high refractive index and being so small that light scattering is negligible.

For dispersing highly hydrophilic metal oxide fine particles into highly hydrophobic silicone resin, it is effective to use a method of forming some covalent bond between the fine particles and the resin to suppress aggregation of the fine particles.

For example, JP-A-2007-119617 discloses a method of introducing a vinyl group to the surface of zirconia particles with a silane coupling agent such as p-styryl(trimethoxy)silane and reacting the particles with a silicone resin having a silicon-hydrogen bond.

### SUMMARY OF THE INVENTION

However, among the resins obtained in JP-A-2007-119617, as an illumination LED encapsulating material, from the viewpoint of light resistance, it was found that there is preferred a resin in which metal oxide fine particles surface-treated with a compound disclosed in JP-A-2007-119617, i.e., vinyl(trimethxoy)silane or vinyl(triethoxy)silane as a silane coupling agent having an aliphatic group rather than an aromatic group are dispersed. However, when such a compound is used solely, it was found that the fine particles are apt to aggregate and thus yet have problems in handling ability and stability.
Moreover, since a silane coupling agent having an alkenyl group or an aromatic group and containing a substituent whose main chain is composed of a C-C bond has a high hydrophobicity and a low solubility to a solvent, usable solvents are limited in the reaction with a similarly highly hydrophobic resin. Moreover, the resin in which metal oxide fine particles treated with the coupling agent are dispersed is not sufficiently satisfactory from the viewpoints of light resistance and heat resistance when the application to the LED encapsulating material is considered.

An object of the present invention is to provide metal oxide fine particles which have a high solubility to solvents, suppress mutual aggregation of the fine particles, and can provide a resin excellent in light resistance, light transmitting property, and heat resistance when dispersed in a resin, a silicone resin composition obtainable by reacting the fine particles, a photosemiconductor element-encapsulating material containing the silicone resin composition, and a photo semiconductor device including a photosemiconductor element encapsulated with the silicone resin composition or the photosemiconductor element-encapsulating material.

Namely, the invention relates to the following (1) to (9).
(1) Metal oxide fine particles treated with a surface-treating agent containing a silicon compound having an alkenyl group having 2 to 20 carbon atoms.
(2) The metal oxide fine particles according to (1), in which the silicon compound having an alkenyl group having 2 to 20 carbon atoms is a compound represented by the formula (I):

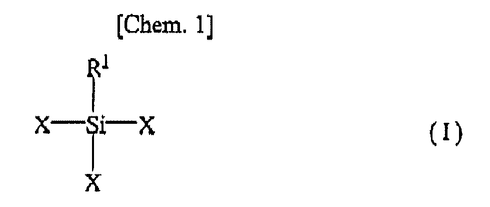

in which R¹ represents an alkenyl group having 2 to 20 carbon atoms, X represents an alkoxy group, an aryloxy group, a cycloalkyloxy group, a halogen atom, or an acetoxy group, provided that all X's may be the same or different.
(3) The metal oxide fine particles according to (1), in which the silicon compound having an alkenyl group having 2 to 20 carbon atoms is a compound represented by the formula (II):

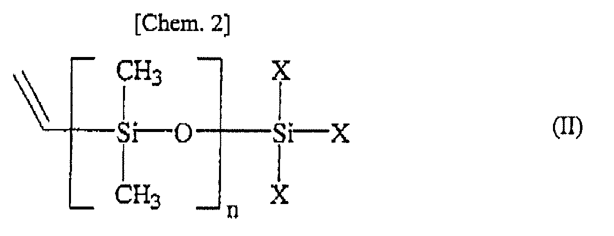

in which X represents an alkoxy group, an aryloxy group, a cycloalkyloxy group, a halogen atom, or an acetoxy group and n represents an integer of 1 to 100, provided that all X's may be the same or different.
(4) The metal oxide fine particles according to any one of (1) to (3), in which the metal oxide fine particles to be surface-treated are fine particles composed of at least one selected from the group consisting of zirconium oxide, titanium oxide, zinc oxide, silica, and alumina.
(5) The metal oxide fine particles according to any one of (1) to (4), in which the metal oxide fine particles after the surface treatment has an average particle diameter of from 1 to 100 nm.
(6) A silicone resin composition obtained by reacting the metal oxide fine particles according to any one of (1) to (5) with an organohydrogensiloxane.
(7) The silicone resin composition according to (6), in which the organohydrogensiloxane is at least one selected from the group consisting of a compound represented by the formula (III):

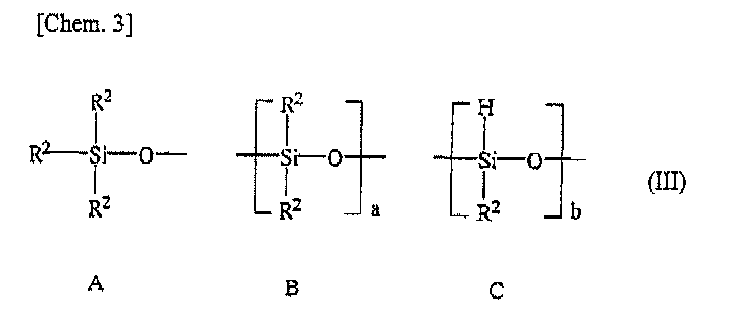

in which A, B, and C are constitutional units where A represents a terminal unit and B and C represent repeating units, R² represents a monovalent hydrocarbon group, a represents 0 or an integer of 1 or more, and b represents an integer of 2 or more, provided that all R²'s may be the same or different,
and a compound represented by the formula (IV):

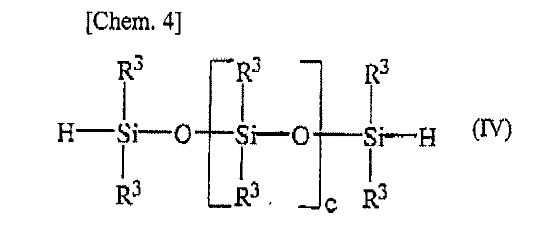

in which R³ represents a monovalent hydrocarbon group and c represents 0 or an integer of 1 or more, provided that all R³'s may be the same or different.
(8) A photosemiconductor element-encapsulating material including the silicone resin composition according to (6) or (7).
(9) A photosemiconductor device including a photosemiconductor element encapsulated with the silicone resin composition according to (6) or (7) or the photosemiconductor element-encapsulating material according to (8).

The metal oxide fine particles of the invention serve excellent advantages of having a high solubility to organic solvents, suppressing mutual aggregation of the fine particles, and being able to provide a resin excellent in light resistance, light transmitting property, and heat resistance when dispersed in the resin.

### DETAILED DESCRIPTION OF THE INVENTION

The metal oxide fine particles of the invention are those treated with a surface-treating agent containing a silicon compound having an alkenyl group having 2 to 20 carbon atoms and steric repulsion is induced between the fine particles by the presence of the alkenyl group having a specific number of carbon atoms on the surface, whereby aggregation is suppressed. Moreover, since an alkenyl group shows a low reactivity except for the presence of an ethylenically unsaturated double bond, it becomes possible to provide a resin excellent in light resistance in the case where the fine particles are dispersed in the resin.

Furthermore, since the ethylenically unsaturated double bond in the alkenyl group reacts with a hydrosilyl group in the resin to form a covalent bond, the dispersibility of the fine particles in the resin becomes satisfactory and thus the light transmitting property of the resulting resin is excellent.

The surface-treating agent for the metal oxide fine particles of the invention contains a silicon compound having an alkenyl group having 2 to 20 carbon atoms.

The silicon compound having an alkenyl group having 2 to 20 carbon atoms is not particularly limited so long as it has an alkenyl group having 2 to 20 carbon atoms but, from the viewpoint of the reactivity with the metal oxide fine particles, there is preferred a compound represented by the formula (I):

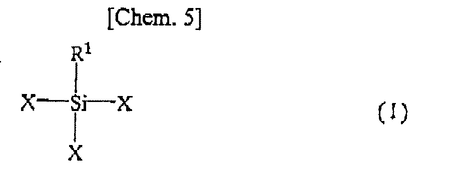

in which R¹ represents an alkenyl group having 2 to 20 carbon atoms, X represents an alkoxy group, an aryloxy group, a cycloalkyloxy group, a halogen atom, or an acetoxy group, provided that all X's may be the same or different

When the number of the carbon atoms in the alkenyl group of R¹ in the formula (1) is less than 2, solubility and dispersion stability are poor. When the number exceeds 20, the particle amount (concentration) in the surface-treated particles decreases, so that a decrease in mechanical strength and a decrease in refractive index are apt to occur. Thus, the alkenyl group in the invention has 2 to 20 carbon atoms. Specifically, a butenyl group, a pentenyl group, a hexenyl group, a heptenyl group, an octenyl group, a nonenyl group, and the like are exemplified. Of these, from the viewpoints of solubility and aggregation stability of the metal oxide fine particles after the surface treatment, the number of carbon atoms in the alkenyl group in the formula (I) is preferably from 4 to 20, more preferably from 5 to 20, and further preferably from 6 to 20. In this regard, the ethylenically unsaturated double bond may be any of the carbon-carbon bonds in the above substituents and the number is also not limited.

X's in the formula (I) each independently represents an alkoxy group, an aryloxy group, a cycloalkyloxy group, a halogen atom or an acetoxy group. As the alkoxy group, there may be mentioned a methoxy group, an ethoxy group, a propoxy group, a butoxy group, a pentoxy group, a hexyloxy group, and the like. There may be mentioned a phenoxy group, a naphthoxy group, and the like as the aryloxy group, and a cyclohexyloxy group, a cyclopentyloxy group, and the like as the cycloalkyloxy group. As the halogen atom, there may be mentioned chlorine, bromine, iodine, and the like. Of these, from the viewpoints of availability, economical efficiency, and reactivity to the metal oxide fine particles, a methoxy group is preferred.

As the compound represented by the formula (I), there may be mentioned butenyl(trimethoxy)silane, pentenyl(trimethoxy)silane, hexenyl(trimethoxy)silane, heptenyl(trimethoxy)silane, octenyl(trimethoxy)silane, butenyl(triethoxy)silane, butenyl(tripropoxy)silane, butenyl(triphenoxy)silane, butenyl(trichloro)silane, pentenyl(triethoxy)silane, pentenyl(tripropoxy)silane, pentenyl(tributoxy)silane, pentenyl(trinaphthoxy)silane, octenyl(trichloro)silane, octenyl(tricyclopentyloxy)silane, octenyl(tribromo)silane, nonenyl(trimethoxy)silane, nonenyl(triethoxy)silane, nonenyl(tripentoxy)silane, nonenyl(triphenoxy)silane, and the like. They can be used solely or in combination of two or more kinds thereof.

Moreover, as the silicon compound having an alkenyl group having 2 to 20 carbon atoms, there is preferred a compound represented by the formula (II):

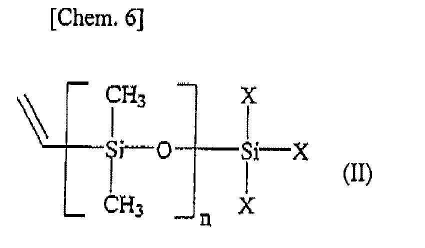

in which X represents an alkoxy group, an aryloxy group, a cycloalkyloxy group, a halogen atom, or an acetoxy group and n represents an integer of 1 to 100, provided that all X's may be the same or different.

The compound represented by the formula (II) bonds to the metal oxide fine particles through the X group which is a reactive functional group. Therefore, the metal oxide fine particles surface-treated with the compound has an increased solubility to organic solvents owing to the nature characteristic to the siloxane group skeleton which is a bonding residue to the metal oxide fine particles, so that the fine particles can be easily dispersed in various resins. Moreover, since the above compound is excellent in light resistance and the siloxane group is also excellent in heat resistance, the resin composition containing the fine particles becomes excellent in both of light resistance and heat resistance.

Furthermore, since the ethylenically saturated double bond reacts with a hydrosilyl group in the resin to form a covalent bond, the dispersibility of the fine particles in the resin becomes more satisfactory and thus the light transmitting property of the resulting resin composition is excellent in light transmitting property.

X in the formula (II) represents an alkoxy group, an aryloxy group, a cycloalkyloxy group, a halogen atom or an acetoxy group. As the alkoxy group, there may be mentioned a methoxy group, an ethoxy group, a propoxy group, a butoxy group, a pentoxy group, a hexyloxy group, and the like. There may be mentioned a phenoxy group, a naphthoxy group, and the like as the aryloxy group, and a cyclohexyloxy group, a cyclopentyloxy group, and the like as the cycloalkoxy group. As the halogen atom, there may be mentioned chlorine, bromine, iodine, and the like. Incidentally, all X's may be the same or different in the formula (II) but, from the viewpoints of availability, economical efficiency, and reactivity to the metal oxide fine particles, all X's are preferably methoxy groups.

n in the formula (II) represents an integer of 1 to 100 but, from the viewpoints of stability and handling ability, n is preferably an integer of 1 to 20, more preferably an integer of 1 to 10.

As the compound represented by the formula (II), there may be mentioned 1-vinyl-9-(trimethoxy)siloxy-1,1,3,3,5,5,7,7,9,9-decamethylpentasiloxane, 1-vinyl-7-(trimethoxy)siloxy-1,1,3,3,5,5,7,7-octamethyltetrasiloxane, 1-vinyl-7-(triethoxy)siloxy-1,1,3,3,5,5,7,7-octamethyltetrasiloxane, 1-vinyl-7-(tribromo)siloxy-1,1,3,3,5,5,7,7-octamethyltetrasiloxane, 1-vinyl-7-(trichloro)siloxy-1,1,3,3,5,5,7,7-octamethyltetrasiloxane, 1-vinyl-5-(trimethoxy)siloxy-1,1,3,3,5,5-hexamethyltrisiloxane, 1-vinyl-7-(trimethoxy)siloxy-1,1,3,3-tetramethyltetrasiloxane, 1-vinyl-3-(trimethoxy)siloxy-1,1-dimethyldisiloxane, and the like. They can be used solely or in combination of two or more kinds thereof.

The compound represented by the formula (II) is not particularly limited and can be synthesized according to known methods.

Moreover, in the invention, another surface-treating agent other than the compounds represented by the formulae (I) and (II) within the range where the advantages of the invention are not impaired. As the other surface-treating agent, there may be mentioned methyl(trimethoxy)silane, ethyl(trimethoxy)silane" hexyl(trimethoxy)silane, decyl(trimethoxy)silane, vinyl(trimethoxy)silane, 2-[(3,4)-epoxycyclohexyl]ethyl(trimethoxy)silane, 3-glycidyloxypropyl(trimethoxy)silane, 3-methacryloxypropyl(trimethoxy)silane, 3-acryloxypropyl(trimethoxy)silane, 1-(trimethoxy)-3,3,3-trimethylsiloxane, and the like.

As the metal oxide fine particles to be surface-treated in the invention, fine particles composed of at least one selected from the group consisting of zirconium oxide, titanium oxide, zinc oxide, silica, and alumina are preferred. Of these, from the viewpoints of availability and reactivity with the surface-treating agent, zirconium oxide is more preferred. In this regard, the average particle diameter of the metal oxide fine particles to be treated is preferably from 1 to 100 nm from the viewpoint of transparency. In the present specification, the average particle diameter of the metal oxide fine particles before and after the surface treatment can be measured according to the method described in Examples to be mentioned below.

The method for the surface treatment is not particularly limited and known methods may be mentioned. For example, there may be exemplified a method of stirring the metal oxide fine particles and the surface-treating agent in a solvent (e.g., isopropyl alcohol) in the range of from 10 to 100°C for a period of from 0.1 to 72 hours (wet process).

The amount of the surface-treating agent containing the compound represented by the formula (I) to be used is preferably from 10 to 500 parts by weight, more preferably from 100 to 300 parts by weight based on 100 parts by weight of the metal oxide fine particles to be surface-treated.

Moreover, the amount of the surface-treating agent represented by the formula (II) to be used is preferably from 10 to 1,000 parts by weight, more preferably from 100 to 800 parts by weight based on 100 parts by weight of the metal oxide fine particles to be surface-treated.

The content of the compounds represented by the formulae (I) and (II) in the surface-treating agent is preferably 10% by weight or more, more preferably 30% by weight or more, further preferably from 50 to 100% by weight from the viewpoint of the reactivity with an organohydrogensiloxane.

Thus, the metal oxide fine particles surface-treated with a specific surface-treating agent are obtained. The average particle diameter of the metal oxide fine particles after the surface treatment is preferably from 1 to 100 nm and, from the viewpoint of transparency of the resin composition obtained by reacting the fine particles, the average particle diameter is more preferably from 1 to 20 nm. Since the average particle diameter of the metal oxide fine particles is hardly changed through the surface treatment by the above method, in order to obtain the metal oxide fine particles having a desired average particle diameter after the surface treatment, it is suitable to regulate the average particle diameter of the metal oxide fine particles to be subjected to the surface treatment beforehand according to a known method.

The invention also provides a silicone resin composition obtainable by reacting the surface-treated metal oxide fine particles with an organohydrogensiloxane. In the composition, by combining the alkenyl group in the surface-treating agent bonded to the metal oxide fine particles with the hydrosilyl group of the organohydrogensiloxane through their addition reaction (hydrosilylation), the metal oxide fine particles can be homogeneously dispersed in the resin and thus the light transmitting property of the resulting composition becomes satisfactory.

The organohydrogensiloxane is preferably at least one selected from the group consisting of a compound represented by the formula (III):

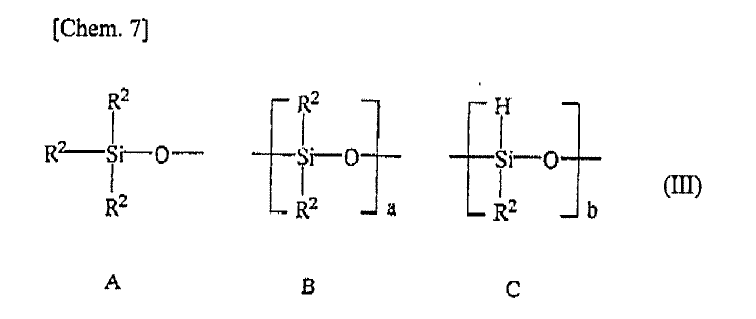

in which A, B, and C are constitutional units where A represents a terminal unit and B and C represent repeating units, R² represents a monovalent hydrocarbon group, a represents 0 or an integer of 1 or more, and b represents an integer of 2 or more, provided that all R²'s may be the same or different,
and a compound represented by the formula (IV):

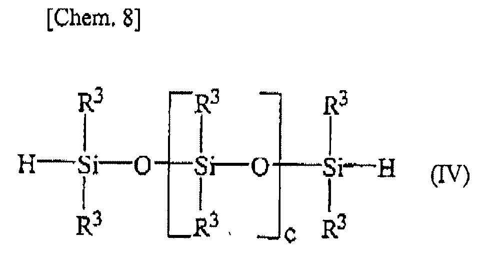

in which R³ represents a monovalent hydrocarbon group and c represents 0 or an integer of 1 or more, provided that all R³'s may be the same or different. In the invention, since the organohydrogensiloxane represented in the above and R¹ in the compound represented by the formula (I) in the surface-treating agent and the compound represented by the formula (II) bonded to the metal oxide fine particles have no aromatic skeleton, the resulting composition becomes excellent in light resistance. In the present specification, the organohydrogensiloxane is a generic term of organohydrogendisiloxane and organohydrogenpolysiloxane ranging from low-molecular-weight compounds to high-molecular-weight compounds.

The compound represented by the formula (III) is composed of the constitutional units A, B, and C where A represents a terminal unit and B and C represent repeating units and is a compound wherein hydrogen is contained in the repeating units.

R²'s in the formula (III), i.e., all of R² in the constitutional unit A, R² in the constitutional unit B, and R² in the constitutional unit C represent monovalent hydrocarbon groups and there may be mentioned saturated or unsaturated, linear, branched, or cyclic hydrocarbon groups. From the viewpoints of availability and economical efficiency, the number of carbon atoms in the hydrocarbon group is preferably from 1 to 20, more preferably from 1 to 10. Specifically, there may be exemplified a methyl group, an ethyl group, a propyl group, a butyl group, a pentyl group, a hexyl group, a phenyl group, a naphthyl group, a cyclohexyl group, and a cyclopentyl group. Among them, from the viewpoints of transparency and light resistance, a methyl group is preferred. In the formula (III), all R²'s may be the same or different and, irrespective of the constitutional units, each independently represents the above hydrocarbon group.

The constitutional unit A is a terminal unit and two units are contained in the formula (III).

The number of the repeating units of the constitutional unit B, i.e., a in the formula (III) represents 0 or an integer of 1 or more and, from the viewpoint of reactivity, is preferably an integer of from 1 to 1,000, more preferably an integer of from 1 to 100.

The number of the repeating units of the constitutional unit C, i.e., b in the formula (III) represents an integer of 2 or more and, from the viewpoint of reactivity, is preferably an integer of from 2 to 10,000, more preferably an integer of from 2 to 1,000.

The sum of a and b is preferably from 2 to 10,000, more preferably from 2 to 2,000. Moreover, the ratio of a to b (a/b) is preferably from 1,000/1 to 1/1,000, more preferably from 100/1 to 1/100.

As such a compound represented by the formula (III), there may be mentioned methylhydrogenpolysiloxane, dimethylpolysiloxane-CO-methylhydrogenpolysiloxane, ethylhydrogenpolysiloxane, methylhydrogenpolysiloxane-CO-methylphenylpolysiloxane, and the like. They can be used solely or in combination of two or more kinds thereof. Of these, the compound wherein R² is a methyl group, a is 0, and b is an integer of 2 or more is preferred.

The compound represented by the formula (III) is desirably has a molecular weight of preferably from 100 to 1,000,000, more preferably from 100 to 100,000 from the viewpoints of stability and handling ability.

The compound represented by the formula (IV) is a compound having hydrogen at the terminal.

R³'s in the formula (IV) represent monovalent hydrocarbon groups and there may be mentioned saturated or unsaturated, linear, branched, or cyclic hydrocarbon groups. From the viewpoints of availability and economical efficiency, the number of carbon atoms in the hydrocarbon group is preferably from 1 to 20, more preferably from 1 to 10. Specifically, there may be exemplified a methyl group, an ethyl group, a propyl group, a butyl group, a pentyl group, a hexyl group, a phenyl group, a naphthyl group, a cyclohexyl group, and a cyclopentyl group. Among them, from the viewpoints of transparency and light resistance, a methyl group is preferred. In the formula (IV), all R³'s may be the same or different but preferably, all are methyl groups.

c in the formula (IV) represents 0 or an integer of 1 or more and, from the viewpoints of reactivity and stability, is an integer of preferably from 0 to 10,000, more preferably from 0 to 2,000.

As such a compound represented by the formula (IV), there may be mentioned dual-end hydrosilyl type polydimethylsiloxane, dual-end hydrosilyl type polymethylphenylsiloxane, dual-end hydrosilyl type polydiphenylsiloxane, and the like. They can be used solely or in combination of two or more kinds thereof. Of these, the compound wherein all R³'s are methyl groups and c is an integer of 1 to 1,000 is preferred.

The compound represented by the formula (IV) is desirably has a molecular weight of preferably from 100 to 1,000,000, more preferably from 100 to 100,000 from the viewpoints of stability and handling ability.

Total content of the compounds represented by the formulae (III) and (IV) in the organohydrogensiloxane is preferably 50% by weight or more, more preferably 80% by weight or more, further preferably substantially 100% by weight.

The reaction of the surface-treated metal oxide fine particles with the organohydrogensiloxane can be conducted according to known methods. Specifically, the reaction can be conducted by stirring the surface-treated metal oxide fine particles and the organohydrogensiloxane in the range of 20 to 100°C for a period of 0.1 to 72 hours, with adding a solvent according to needs, in the presence of a hydrosilylation catalyst, e.g., a platinum catalyst such as platinum black, platinum chloride, chloroplatinic acid, a platinum-olefin complex, a platinum-carbonyl complex, or platinum-acetylacetate; a palladium catalyst, a rhodium catalyst, or the like. Since the metal oxide fine particles of the invention are surface-treated with the compound represented by the formula (I) or (II) and hence have a high solubility to solvents, the solvent to be used in the above reaction is not particularly limited and, for example, various solvents such as toluene, hexane, isopropyl alcohol, and acetone can be used. Since the fine particles treated with the compound represented by the formula (I) are slightly poor in solubility to solvents as compared with the fine particles treated with the compound represented by the formula (II), it is preferred to use non-polar solvents such as toluene and hexane. In this regard, after the reaction, the solvent may be removed from the resulting reaction mixture by evaporation under reduced pressure.

The content of the hydrosilylation catalyst is, for example, in the case of using a platinum catalyst, preferably from 1.0×10⁻⁴ to 0.5 part by weight, more preferably from 1.0×10⁻³ to 0.05 part by weight in terms of a platinum amount based on 100 parts by weight of the organohydrogensiloxane in the resin composition.

The content of the surface-treated metal oxide fine particles is preferably from 0.01 to 300 parts by weight, more preferably from 0.1 to 250 parts by weight, further preferably from 0,1 to 200 parts by weight based on 100 parts by weight of the organohydrogensiloxane in the resin composition.

The silicone resin composition of the invention may contain, in addition to the above, additives such as aging inhibitors, modifiers, surfactants, dyes, pigments, discoloration inhibitors, and UV absorbents within the range where the advantage of the invention are not impaired.

The silicone resin composition of the invention is excellent in light resistance, light transmitting property, and heat resistance and hence is suitably used as a photosemiconductor element-encapsulating material, Therefore, the invention provides a photosemiconductor element-encapsulating material containing the silicone resin composition of the invention and a photosemiconductor device including a photosemiconductor element encapsulated with the silicone resin composition or the photosemiconductor element-encapsulating material.

The photosemiconductor device of the invention can be produced by encapsulating an LED element using the silicone resin composition of the invention as a photosemiconductor element-encapsulating material. Specifically, the photosemiconductor device can be produced by applying the silicone resin composition of the invention on a substrate having the LED element mounted thereon in an appropriate thickness by a method such as casting, spin coating, or roll coating or by covering it through potting and subsequently heating and drying the applied substrate.

Since the photosemiconductor device of the invention contains the silicone resin composition excellent in light resistance, light transmitting property, and heat resistance as a photosemiconductor element-encapsulating material, the device may be a photosemiconductor device having a blue or white LED element mounted thereon.

### EXAMPLES

The following will describe the present invention with reference to Examples and Comparative Examples, but the invention is not limited by these Examples and the like.

Average particle diameter of metal oxide fine particles before and after surface treatment
The average particle diameter of the metal oxide fine particles means average particle diameter of primary particles of the metal oxide fine particles. On a transmission electron microscope TEM, diameters of 100 particles shown in a display are measured and an average value of their diameters is regarded as the average particle diameter.

Molecular weight of silicone derivative
The molecular weight is determined as a value measured by gel permeation chromatography (GPC) in terms of polystyrene.

### Example 1

After 0.81 g of an aqueous dispersion (solid concentration: 40% by weight, average particle diameter: 7 nm) of zirconium oxide was diluted with 3 g of ethanol, a solution obtained by dissolving 0.89 g (3.8 mmol) (275 parts by weight based on 100 parts by weight of the metal oxide fine particles to be surface-treated) of 7-octenyl(trimethoxy)silane in 10 g of isopropyl alcohol was added thereto, followed by stirring at room temperature (25°C) for 20 hours. Thereafter, the solvent was removed by evaporation under reduced pressure to obtain an oil (transparent) containing zirconium oxide particles having a 7-octenylsilyl group bonded to the surface thereof. The average particle diameter of the zirconium oxide particles after the surface treatment was 7 nm.

### Example 2

A reaction was conducted in the same manner as in Example 1 except that 0.44 g (2.0 mmol) (136 parts by weight based on 100 parts by weight of the metal oxide fine particles to be surface-treated) of 7-octenyl(trimethoxy)silane and 0.39 g (2.0 mmol) of hexyl(trimethoxy)silane were used instead of the use of 0.89 g (3.8 mmol) of 7-octenyl(trimethoxy)silane in Example 1, whereby an oil (transparent) containing zirconium oxide particles having a 7-octenylsilyl group and a hexylsilyl group both bonded to the surface was obtained. The average particle diameter of the zirconium oxide particles after the surface treatment was 7 nm.

### Example 3

A reaction was conducted in the same manner as in Example 1 except that 0.81 g of an aqueous dispersion (solid concentration: 40% by weight, average particle diameter: 10 nm) of silica was used instead of the use of 0.81 g of the aqueous dispersion of zirconium oxide in Example 1, whereby an oil (transparent) containing silica particles having a 7-octenylsilyl group bonded to the surface was obtained. The average particle diameter of the zirconium oxide particles after the surface treatment was 10 nm. Moreover, the amount of 7-octenyl(trimethoxy)silane used was 275 parts by weight based on 100 parts by weight of the metal oxide fine particles to be surface-treated.

### Example 4

A reaction was conducted in the same manner as in Example 1 except that 0.67 g (3.8 mmol) (207 parts by weight based on 100 parts by weight of the metal oxide fine particles to be surface-treated) of butenyl(trimethoxy)silane was used instead of the use of 0.89 g (3.8 mmol) of 7-octenyl(trimethoxy)silane in Example 1, whereby an oil (transparent) containing zirconium oxide particles having a butenylsilyl group bonded to the surface was obtained. The average particle diameter of the zirconium oxide particles after the surface treatment was 7 nm.

### Comparative Example 1

A reaction was conducted in the same manner as in Example 1 except that 0.56 g (3.8 mmol) (173 parts by weight based on 100 parts by weight of the metal oxide fine particles to be surface-treated) of vinyl(trimethoxy)silane was used instead of the use of 0.89 g (3.8 mmol) of 7-octenyl(trimethoxy)silane in Example 1, whereby an oil (turbid) containing zirconium oxide particles having a vinylsilyl group bonded to the surface was obtained, The average particle diameter of the zirconium oxide particles after the surface treatment was 7 nm.

### Comparative Example 2

A reaction was conducted in the same manner as in Example 1 except that 0.85 g (3.8 mmol) (262 parts by weight based on 100 parts by weight of the metal oxide fine particles to be surface-treated) of p-styryl(trimethoxy)silane was used instead of the use of 0.89 g (3.8 mmol) of 7-octenyl(trimethoxy)silane in Example 1, whereby an oil (slightly turbid) containing zirconium oxide particles having a p-styrylsilyl group bonded to the surface was obtained. The average particle diameter of the zirconium oxide particles after the surface treatment was 7 nm.

Solubility and aggregation stability of the resulting metal oxide fine particles after the surface treatment were evaluated according to the following method. The results are shown in Table 1.

Solubility The obtained oil containing the metal oxide fine particles after the surface treatment was added to each solvent of toluene, hexane, and isopropyl alcohol so that concentration of the fine particles became 2% by weight and the whole was stirred. Thereafter, the case where the resulting solution was in a transparent state was ranked as "A", the case where the solution was in a translucent state was ranked as "B", and the case where the solution was turbid was ranked as "C".

Dispersion stability When dissolution of the obtained oil containing the metal oxide fine particles after the surface treatment in toluene and concentration of the solution was repeated three times, the solution state was visually observed. The case where the solution was in a transparent solution state without aggregation was ranked as "A" and the case where the solution was turbid with aggregation was ranked as "B".

**Table 1**

| | | Example 1 | Example 2 | Example 3 | Example 4 | Comparative Example 1 | Comparative Example 2 |
|---|---|---|---|---|---|---|---|
| Metal particles before treatment | | zirconium oxide | zirconium oxide | silica | zirconium oxide | zirconium oxide | zirconium oxide |
| Surface-treating compound | | 7-octenyl(OMe)₃Si | 7-octenyl(OMe)₃Si hexyl(OMe)₃Si | 7-octenyl(OMe)₃Si | butenyl(OMe)₃Si | vinyl(OMe)₃Si | p-styryl(Ome)₃Si |
| Solubility | toluene | A | A | A | A | C | A |
| | hexane | A | A | A | B | C | C |
| | isopropyl alcohol | A | A | A | A | C | A |
| Dispersion stability | | A | A | A | A | - | B |

As a result, it is found that the metal oxide fine particles of Examples 1 to 4 after the surface treatment show solubility to various solvent and are stably dispersed without aggregation. Incidentally, since the metal oxide fine particles of Comparative Example 1 was not dissolved in toluene, dispersion stability could not be evaluated.

### Example 5

To a mixture of 0.4 g (3.4 parts by weight of zirconium particles based on 100 parts by weight of the organohydrogensiloxane) of the oil containing zirconium oxide particles of Example 1 after the surface treatment, 10 mL of toluene, and 3.1 g of an organohydrogenpolysiloxane [a compound represented by the formula (IV) in which all R³'s are methyl groups and c is about 50, average molecular weight: 4,000, SiH group equivalent: 0.4 mmol/g] was added 3 µL (2.0×10⁻³ part by weight based on 100 parts by weight of the organohydrogensiloxane) of a platinum-divinylsiloxane complex solution (platinum concentration: 2% by weight) as a hydrosilylation catalyst, followed by stirring at 80°C for 30 minutes. Thereafter, the solvent was removed by evaporation under reduced pressure to obtain a silicone resin composition containing zirconium oxide particles after the surface treatment dispersed therein.

### Example 6

A reaction was conducted in the same manner as in Example 5 except that 0.4 g of the oil of Example 2 was used instead of the use of 0.4 g of the oil of Example 1 in Example 5, whereby a silicone resin composition containing zirconium oxide particles after the surface treatment dispersed therein was obtained. The content of the metal oxide fine particles after the surface treatment was 7.2 parts by weight of zirconium particles based on 100 parts by weight of the organohydrogensiloxane.

### Example 7

A reaction was conducted in the same manner as in Example 5 except that 0.4 g of the oil of Example 3 was used instead of the use of 0.4 g of the oil of Example 1 in Example 5, whereby a silicone resin composition containing zirconium oxide particles after the surface treatment dispersed therein was obtained. The content of the metal oxide fine particles after the surface treatment was 3.4 parts by weight of silica particles based on 100 parts by weight of the organohydrogensiloxane.

### Example 8

A reaction was conducted in the same manner as in Example 5 except that 0.4 g of the oil of Example 4 was used instead of the use of 0.4 g of the oil of Example 1 in Example 5, whereby a silicone resin composition containing zirconium oxide particles after the surface treatment dispersed therein was obtained. The content of the metal oxide fine particles after the surface treatment was 3.1 parts by weight of zirconium particles based on 100 parts by weight of the organohydrogensiloxane.

### Comparative Example 3

A reaction was conducted in the same manner as in Example 5 except that 0.4 g of the oil of Comparative Example 2 was used instead of the use of 0.4 g of the oil of Example 1 in Example 5, whereby a silicone resin composition containing zirconium oxide particles after the surface treatment dispersed therein was obtained. The content of the metal oxide fine particles after the surface treatment was 3.5 parts by weight of zirconium particles based on 100 parts by weight of the organohydrogensiloxane.

Light resistance and light transmitting property of the obtained silicone resin compositions were evaluated according to the following method. The results are shown in Table 2.

### Light resistance

A blue LED element was potting-encapsulated with each silicone resin composition and the resin was completely cured by heating it at 100°C for 30 minutes and then at 150°C for 1 hour to produce an LED device. An electric current of 300 mA was passed through the resulting LED device and the state of the encapsulated resin immediately after the start of the test was visually observed. Thereafter, the LED element was allowed to stand in a lighted state and the state of the encapsulated resin after the passage of 300 hours was visually observed. The case where no change was observed was ranked as "A" and the case where the resin was discolored was ranked as "B".

### Light transmitting property

The light transmittance (%) of each silicone resin composition at a wavelength of 450 nm was measured by means of a spectrophotometer (U-4100 manufactured by Hitachi High-Technologies Corporation) to evaluate a light transmitting property. In this regard, as the measuring sample, one obtained by sandwiching matching oil and each silicone resin composition between two glass plates was used so that influence of light scattering was not exerted.

**Table 2**

| | Example 5 | Example 6 | Example 7 | Example 8 | Comparative Example 3 |
|---|---|---|---|---|---|
| Light resistance | A | A | A | A | B |
| Light transmittance (%) | 99 | 99 | 99 | 99 | 99 |

As a result, it is found that the resin compositions of Examples containing the metal oxide fine particles after the surface treatment dispersed therein exhibit a high light transmittance and are excellent in light resistance.

Synthetic Example 1 of formula (II) [1-vinyl-7-(trimethoxy)siloxy-1,1,3,3,5,5,7,7-octamethyltetrasiloxane]
It was prepared by conducting the reaction shown below.

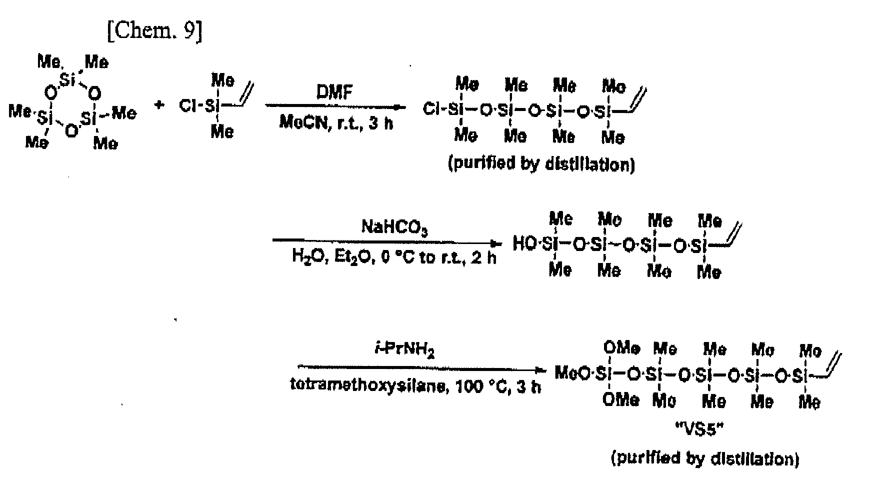

### First step

To an eggplant-shaped flask was added 79.51 g (0.36 mol) of hexamethylcyclotrisiloxane. Inside of the apparatus was purged with nitrogen and 33.86 mL of anhydrous acetonitile and 2.75 mL of anhydrous DMF as a catalyst were added thereto by means of a syringe. Then, 43.12 g (0.36 mol) of dimethylchlorovinylsilane was added thereto, followed by stirring at room temperature (25°C) for 3 hours. After the reaction, distillation was conducted under the conditions of a distillation temperature of from 55 to 58°C and a pressure of 0.2 mmHg to obtain 1-vinyl-7-chloro-1,1,3,3,5,5,7,7roctamethyltetrasiloxane as a colorless transparent liquid (yield: 48%). The structure of the obtained compound was confirmed by ¹H-NMR.

### Second step

To an eggplant-shaped flask were added 250 g of distilled water, 20 g of sodium hydrogen carbonate, and 175 mL of diethyl ether (d=0.72), and finally, 135 g of ice was added. While the flask was cooled on an ice bath, 50 g of (0.15 mol) of the reaction product obtained in the above was added dropwise. After the dropwise addition, the mixture was vigorously stirred at room temperature (25°C) for about 2 hours. After the reaction, the reaction liquid was transferred to a separatory funnel, the diethyl ether phase was separated, and the aqueous phase was extracted with diethyl ether three times. The obtained diethyl ether solution was dried with adding magnesium sulfate, followed by filtration. Thereafter, the solvent was removed by evaporation in vacuo to obtain 1-vinyl-7-hydroxy-1,1,3,3,5,5,7,7-octamethyltetrasiloxane as a colorless transparent liquid (yielded amount: 43.5 g, yield: 92.0%). The structure of the obtained compound was confirmed by ¹H-NMR.

### Third step

To an eggplant-shaped flask under nitrogen were added 20 g (0.06 mol) of the reaction product obtained in the above and 28.13 g (0.18 mol) of tetramethoxysilane. After mixing, 0.36 g (0.0061 mol) of isopropylamine was added as a catalyst by means of a syringe. Thereafter, after stirring at 100°C for 3 hours, distillation was conducted under the conditions of a distillation temperature of from 60 to 70°C and a pressure of 0.1 mmHg to obtain 1-vinyl-7-(trimethoxy)siloxy-1,1,3,3,5,5,7,7-octamethyltetrasiloxane [compound A of formula (II)] as a colorless transparent liquid (yielded amount: 18.4 g, yield: 67.3%). The structure of the obtained compound was confirmed by ¹H-NMR.

### Synthetic Example 2 of formula (II) [1-vinyl-3-(trimethoxy)siloxy-1,1-dimethyldisiloxane]

In the reaction at the third step of the above compound A of the formula (II), a reaction was similarly conducted except that 6 g (0.06 mol) of 1-vinyl-1-hydroxy-1,1-dimethyldisiloxane was used instead of 1-vinyl-7-hydroxy-1,1,3,3,5,5,7,7-octamethyltetrasiloxane to obtain 1-vinyl-3-(trimethoxy)siloxy-1,1-dimethyldisiloxane [compound B of formula (II)] as a colorless transparent liquid (yielded amount: 13.3 g, yield: 70%). The structure of the obtained compound was confirmed by ¹H-NMR.

### Example 9

After 0.81 g of an aqueous dispersion (solid concentration: 40% by weight, average particle diameter: 7 nm) of zirconium oxide was diluted with 3 g of ethanol, a solution obtained by dissolving 1.69 g (3.8 mmol) (522 parts by weight based on 100 parts by weight of the metal oxide fine particles to be surface-treated) of the compound A of the formula (II) synthesized in the above in 10 g of isopropyl alcohol was added thereto, followed by stirring at room temperature (25°C) for 20 hours. Thereafter, the solvent was removed by evaporation under reduced pressure to obtain an oil (transparent) containing zirconium oxide particles having a 1-vinyl-1,1,3,3,5,5,7,7-octamethyltetrasiloxysilyl group bonded to the surface. The average particle diameter of the zirconium oxide particles after the surface treatment was 7 nm.

### Example 10

A reaction was conducted in the same manner as in Example 9 except that 0.85 g (3.8 mmol) (262 parts by weight based on 100 parts by weight of the metal oxide fine particles to be surface-treated) of the compound B of the formula (II) synthesized in the above was used instead of the use of 1.69 g (3.8 mmol) of the compound A of the formula (II) in Example 9, whereby an oil (transparent) containing zirconium oxide particles having a 1-vinyl-1,1-dimethyldisiloxysilyl group bonded to the surface was obtained. The average particle diameter of the zirconium oxide particles after the surface treatment was 7 nm.

### Example 11

A reaction was conducted in the same manner as in Example 9 except that 0.85 g (1.9 mmol) (262 parts by weight based on 100 parts by weight of the metal oxide fine particles to be surface-treated) of the compound A of the formula (II) and 0.23 g (1.9 mmol) of methyl(trimethoxy)silane were used instead of the use of 1.69 g (3.8 mmol) of the compound A of the formula (II) in Example 9, whereby an oil (transparent) containing zirconium oxide particles having a 1-vinyl-1,3,3,5,5,7,7-octamethyltetrasiloxysilyl group and a methylsilyl group both bonded to the surface was obtained. The average particle diameter of the zirconium oxide particles after the surface treatment was 7 nm.

### Example 12

A reaction was conducted in the same manner as in Example 9 except that 0.81 g of an aqueous dispersion (solid concentration: 40% by weight, average particle diameter: 10 nm) of silica was used instead of the use of 0.81 g of the aqueous dispersion of zirconium oxide in Example 9, whereby an oil (transparent) containing silica particles having a 1-vinyl-1,1,3,3,5,5,7,7-octamethyltetrasiloxysilyl group bonded to the surface was obtained. The average particle diameter of the silica particles after the surface treatment was 10 nm. Also, the amount of 1-vinyl-7-(trimethoxy)siloxy-1,1,3,3,5,5,7,7-octaznethyltetrasiloxane used was 522 parts by weight based on 100 parts by weight of the metal oxide fine particles to be surface-treated.

### Comparative Example 4

A reaction was conducted in the same manner as in Example 9 except that 0.89 g (3.8 mmol) (275 parts by weight based on 100 parts by weight of the metal oxide fine particles to be surface-treated) of 7-octenyl(trimethoxy)silane was used instead of the use of 1.69 g (3.8 mmol) of the compound A of the formula (II) in Example 9, whereby an oil (transparent) containing zirconium oxide particles having a 7-octenylsilyl group bonded to the surface was obtained. The average particle diameter of the zirconium oxide particles after the surface treatment was 7 nm.

### Comparative Example 5

A reaction was conducted in the same manner as in Example 9 except that 0.56 g (3.8 mmol) (173 parts by weight based on 100 parts by weight of the metal oxide fine particles to be surface-treated) of vinyl(trimethoxy)silane was used instead of the use of 1.69 g (3.8 mmol) of the compound A of the formula (II) in Example 9, whereby an oil (transparent) containing zirconium oxide particles having a vinylsilyl group bonded to the surface was obtained. The average particle diameter of the zirconium oxide particles after the surface treatment was 7 nm.

### Comparative Example 6

A reaction was conducted in the same manner as in Example 9 except that 0.85 g (3.8 mmol) (262 parts by weight based on 100 parts by weight of the metal oxide fine particles to be surface-treated) of p-styryl(trimethoxy)silane was used instead of the use of 1.69 g (3.8 mmol) of the compound A of the formula (II) in Example 1, whereby an oil (transparent) containing zirconium oxide particles having a p-styrylsilyl group bonded to the surface was obtained. The average particle diameter of the zirconium oxide particles after the surface treatment was 7 nm.

Solubility and re-dispersibility of the obtained metal oxide fine particles after the surface treatment were evaluated according to the following methods. Results are shown in Table 3.

### Solubility

Each of the obtained oil containing the metal oxide fine particles after the surface treatment was added to each solvent of hexane, toluene, acetone, isopropyl alcohol, and methanol so that concentration of the fine particles became 2% by weight and the whole was stirred. Thereafter, the case where the resulting solution was in a transparent state was ranked as "A" and the case where the solution was turbid was ranked as "B".

### Re-dispersibility

Each of the obtained oil containing the metal oxide fine particles after the surface treatment was dissolved in toluene and then, the solvent was completely removed by evaporation while heating at 80°C for 1 hour under reduced pressure. Thereafter, when the residue was re-dissolved in toluene so that concentration of the fine particles became 2% by weight, the case where the resulting solution was in a transparent state was ranked as "A", the case where the solution was in a translucent state was ranked as "B", and the case where the solution was turbid was ranked as "C".

**Table 3**

| | | Example 9 | Example 10 | Example 11 | Example 12 | Comparative Example 4 | Comparative Example 5 | Comparative Example 6 |
|---|---|---|---|---|---|---|---|---|
| Metal particles before treatment | | zirconium oxide | zirconium oxide | zirconium oxide | silica | zirconium oxide | zirconium oxide | zirconium oxide |
| Surface-treating compound | | compound A of formula (II) | compound B of formula (II) | compound A of formula (II) methyl-trimethoxy-silane | compound A of formula (II) | I 7-octenyl-Si(OMe)₃ | vinyl-Si(OMe)₃ | p-styryl-Si(OMe)₃ |
| Content of formula (II) (% by weight) | | 100 | 100 | 79 | 100 | 0 | 0 | 0 |
| Solubility | hexane | A | A | A | A | A | C | C |
| | toluene | A | A | A | A | A | C | A |
| | acetone | A | A | A | A | A | C | A |
| | isopropyl alcohol | A | A | A | A | A | C | A |
| | methanol | A | A | A | A | C | A | C |
| Re-dispersibility | | A | B | A | A | A | C | C |

| | | | | | | | | |
|---|---|---|---|---|---|---|---|---|
| * Compound A of formula (II): 1-vinyl-7-(trimethoxy)siloxy-1,1,3,3,5,5,7,7-octamethyltetrasiloxane Compound B of formula (II): 1-vinyl-3-(trimethoxy)siloxy-1,1-dimethyidisiloxane 1) It shows content (% by weight) of the compound represented by the formula (II) in the surface-treating agent. | | | | | | | | |

As a result, it is found that the metal oxide fine particles of Examples 9 to 12 after the surface treatment exhibit a high solubility to various solvents.

Then, resin compositions containing the obtained metal oxide fine particles were prepared.

### Example 13

To a mixture of 0.4 g (3.4 parts by weight of zirconium particles based on 100 parts by weight of the organohydrogensiloxane) of the oil containing zirconium oxide particles of Example 9 after the surface treatment, 10 mL of toluene, and 2.86 g of an organohydrogenpolysiloxane [a compound represented by the formula (IV) in which all R³'s are methyl groups and c is about 50, average molecular weight: 4,000, SiH group equivalent: 0.4 mmol/g] was added 3 µl (platinum content: 2.1×10⁻³ part by weight based on 100 parts by weight of the organohydrogensiloxane) of a platinum-divinylsiloxane complex solution (platinum concentration: 2% by weight), followed by stirring at room temperature for 30 minutes. Thereafter, the solvent was removed by evaporation under reduced pressure to obtain a silicone resin composition containing zirconium oxide particles after the surface treatment dispersed therein.

### Example 14

A reaction was conducted in the same manner as in Example 13 except that 0.4 g of the oil of Example 10 was used instead of the use of 0.4 g of the oil of Example 9 in Example 13, whereby a silicone resin composition containing zirconium oxide particles after the surface treatment dispersed therein was obtained. The content of the metal oxide fine particles after the surface treatment was 3.3 parts by weight of zirconium particles based on 100 parts by weight of the organohydrogensiloxane.

### Example 15

A reaction was conducted in the same manner as in Example 13 except that 0.4 g of the oil of Example 11 was used instead of the use of 0.4 g of the oil of Example 9 in Example 13, whereby a silicone resin composition containing zirconium oxide particles after the surface treatment dispersed therein was obtained. The content of the metal oxide fine particles after the surface treatment was 6.8 parts by weight of zirconium particles based on 100 parts by weight of the organohydrogensiloxane.

### Example 16

A reaction was conducted in the same manner as in Example 13 except that 0.4 g of the oil of Example 12 was used instead of the use of 0.4 g of the oil of Example 9 in Example 13, whereby a silicone resin composition containing zirconium oxide particles after the surface treatment dispersed therein was obtained. The content of the metal oxide fine particles after the surface treatment was 3.4 parts by weight of silica particles based on 100 parts by weight of the organohydrogensiloxane.

### Comparative Example 7

A reaction was conducted in the same manner as in Example 13 except that 0.4 g of the oil of Comparative Example 4 was used instead of the use of 0.4 g of the oil of Example 9 in Example 13, whereby a silicone resin composition containing zirconium oxide particles after the surface treatment dispersed therein was obtained. The content of the metal oxide fine particles after the surface treatment was 3.4 parts by weight of zirconium particles based on 100 parts by weight of the organohydrogensiloxane.

### Comparative Example 8

A reaction was conducted in the same manner as in Example 13 except that 0.4 g of the oil of Comparative Example 5 was used instead of the use of 0.4 g of the oil of Example 9 in Example 13, whereby a silicone resin composition containing zirconium oxide particles after the surface treatment dispersed therein was obtained. The content of the metal oxide fine particles after the surface treatment was 3.4 parts by weight of zirconium particles based on 100 parts by weight of the organohydrogensiloxane.

### Comparative Example 9

A reaction was conducted in the same manner as in Example 13 except that 0.4 g of the oil of Comparative Example 6 was used instead of the use of 0.4 g of the oil of Example 9 in Example 13, whereby a silicone resin composition containing zirconium oxide particles after the surface treatment dispersed therein was obtained. The content of the metal oxide fine particles after the surface treatment was 3.4 parts by weight of zirconium particles based on 100 parts by weight of the organohydrogensiloxane.

Light resistance, light transmitting property, and heat resistance of the obtained silicone resin compositions were evaluated according to the following methods. The results are shown in Table 4.

### Light resistance

A blue LED element was potting-encapsulated with each silicone resin composition and the resin was completely cured by heating it at 100°C for 30 minutes and then at 150°C for 1 hour to produce an LED device. An electric current of 300 mA was passed through the resulting LED device and the state of the encapsulated resin immediately after the start of the test was visually observed. Thereafter, the LED element was allowed to stand in a lighted state and the state of the encapsulated resin after the passage of 300 hours was visually observed. The case where no change was observed was ranked as "A" and the case where the resin was discolored was ranked as "B".

### Light transmitting property

The light transmittance (%) of each silicone resin composition at a wavelength of 450 nm was measured by means of a spectrophotometer (U-4100 manufactured by Hitachi High-Technologies Corporation) to evaluate a light transmitting property. In this regard, as the measuring sample, one obtained by sandwiching matching oil and each silicone resin composition between two glass plates was used so that influence of light scattering was not exerted.

### Heat resistance

Light transmittance of each silicone composition after heated at 200°C for 100 hours was measured in the same manner as in the above-mentioned evaluation of a light transmitting property and a ratio of the measured value to the value before heating, i.e. the value measured at the light transmitting property test (light transmittance after heating/light transmittance before heating × 100) (%) was calculated. One where the ratio was 95% or more was ranked as "A" and one where the ratio was less than 95% was ranked as "B".

**Table 4**

| | Example 13 | Example 14 | Example 15 | Example 16 | Comparative Example 7 | Comparative Example 8 | Comparative Example 9 |
|---|---|---|---|---|---|---|---|
| Light resistance | A | A | A | A | A | A | B |
| Light transmittance (%) | >99 | >99 | >99 | >99 | <95 | <95 | <95 |
| Heat resistance | A | A | A | A | B | B | B |

As a result, it is found that the resin compositions containing the metal oxide fine particles of Examples after the surface treatment dispersed therein are excellent in light resistance, light transmitting property, and heat resistance.

While the invention has been described in detail with reference to specific embodiments thereof, it will be apparent to one skilled in the art that various changes and modifications can be made therein without departing from the spirit and scope thereof.
Incidentally, the present application is based on Japanese Patent Application No. 2009-044302 filed on February 26, 2009 and Japanese Patent Application No. 2009-173386 filed on July 24, 2009, and the contents are incorporated herein by reference.
Also, all the references cited herein are incorporated as a whole.

The metal oxide fine particles are, for example, suitably used in the production of semiconductor elements for backlights of liquid crystal displays, traffic signals, outdoor large displays, and advertising boards after being contained in encapsulating resin compositions.

## Claims

1. Metal oxide fine particles treated with a surface-treating agent containing a silicon compound having an alkenyl group having 2 to 20 carbon atoms.

2. The metal oxide fine particles according to claim 1, wherein the silicon compound having an alkenyl group having 2 to 20 carbon atoms is a compound represented by the formula (I): 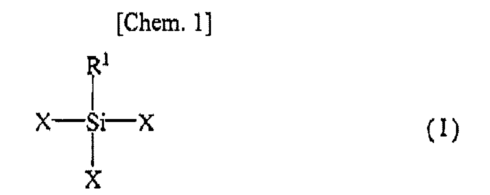 wherein R¹ represents an alkenyl group having 2 to 20 carbon atoms, X represents an alkoxy group, an aryloxy group, a cycloalkylaxy group, a halogen atom or an acetoxy group, provided that all X's may be the same or different.

3. The metal oxide fine particles according to claim 1, wherein the silicon compound having an alkenyl group having 2 to 20 carbon atoms is a compound represented by the formula (II): 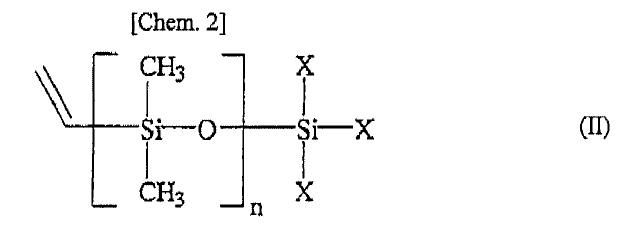 wherein X represents an alkoxy group, an aryloxy group, a cycloalkyloxy group, a halogen atom or an acetoxy group and n represents an integer of 1 to 100, provided that all X's may be the same or different.

4. The metal oxide fine particles according to any one of claims 1 to 3,
wherein the metal oxide fine particles to be surface-treated are fine particles composed of at least one selected from the group consisting of zirconium oxide, titanium oxide, zinc oxide, silica and alumina.

5. The metal oxide fine particles according to any one of claims 1 to 4,
wherein the metal oxide fine particles after the surface treatment has an average particle diameter of from 1 to 100 nm.

6. A silicone resin composition obtained by reacting the metal oxide fine particles according to any one of claims 1 to 5 with an organohydrogensiloxane.

7. The silicone resin composition according to claim 6, wherein the organohydrogensiloxane is at least one selected from the group consisting of a compound represented by the formula (III): 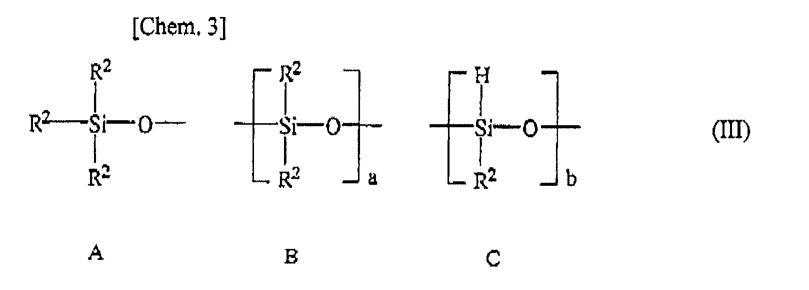 wherein A, B, and C are constitutional units where A represents a terminal unit and B and C represent repeating units, R² represents a monovalent hydrocarbon group, a represents 0 or an integer of 1 or more, and b represents an integer of 2 or more, provided that all R²'s may be the same or different, and a compound represented by the formula (IV): 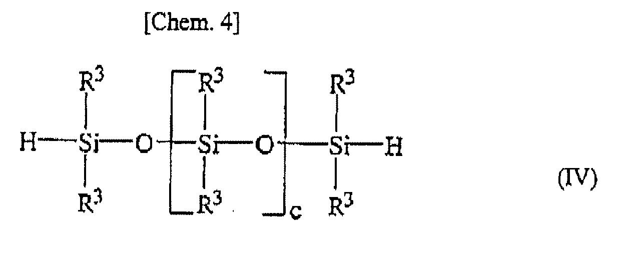 wherein R³ represents a monovalent hydrocarbon group and c represents 0 or an integer of 1 or more, provided that all R³'s may be the same or different.

8. A photosemiconductor element-encapsulating material comprising the silicone resin composition according to claim 6 or 7.

9. A photosemiconductor device comprising a photosemiconductor element encapsulated with the silicone resin composition according to claim 6 or 7 or the photosemiconductor element-encapsulating material according to claim 8.
